(19) Europäisches Patentamt / European Patent Office / Office européen des brevets

(11) **EP 4 132 764 B1**

(12) **EUROPÄISCHE PATENTSCHRIFT**

(45) Veröffentlichungstag und Bekanntmachung des Hinweises auf die Patenterteilung:
**20.11.2024   Patentblatt 2024/47**

(21) Anmeldenummer: **21718530.5**

(22) Anmeldetag: **07.04.2021**

(51) Internationale Patentklassifikation (IPC):
**B29C 45/76** $^{(2006.01)}$      **B29C 45/00** $^{(2006.01)}$

(52) Gemeinsame Patentklassifikation (CPC):
**B29C 45/76; B29C 45/0005; B29C 45/7693;**
B29C 2945/76949; B29C 2945/76979

(86) Internationale Anmeldenummer:
**PCT/EP2021/059092**

(87) Internationale Veröffentlichungsnummer:
**WO 2021/204893 (14.10.2021 Gazette 2021/41)**

(54) **VERFAHREN ZUR SIMULATION EINER FASERORIENTIERUNG IN EINEM SPRITZGUSSBAUTEIL AUS EINEM FASERVERSTÄRKTEN KUNSTSTOFF UND AUSLEGUNGSVERFAHREN ZUM AUSLEGEN EINES SPRITZGUSSBAUTEILS AUS EINEM FASERVERSTÄRKTEN KUNSTSTOFF**

METHOD FOR SIMULATING FIBRE ORIENTATION IN AN INJECTION-MOULDED COMPONENT MADE OF A FIBRE-REINFORCED PLASTICS MATERIAL, AND DESIGN METHOD FOR DESIGNING AN INJECTION-MOULDED COMPONENT MADE OF A FIBRE-REINFORCED PLASTICS MATERIAL

PROCÉDÉ DE SIMULATION D'ORIENTATION DE FIBRE DANS UN COMPOSANT MOULÉ PAR INJECTION CONSTITUÉ D'UNE MATIÈRE PLASTIQUE RENFORCÉE DE FIBRES, ET PROCÉDÉ DE CONCEPTION PERMETTANT LA CONCEPTION D'UN COMPOSANT MOULÉ PAR INJECTION CONSTITUÉ À PARTIR D'UNE MATIÈRE PLASTIQUE RENFORCÉE DE FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2020   DE 102020204586**

(43) Veröffentlichungstag der Anmeldung:
**15.02.2023   Patentblatt 2023/07**

(73) Patentinhaber: **Robert Bosch GmbH**
**70442 Stuttgart (DE)**

(72) Erfinder:
• **KECH, Armin**
  **70376 Stuttgart (DE)**
• **OSSWALD, Tim A.**
  **Madison, Wisconsin 53711 (US)**
• **CRUZ BERNAL, Camilo Andres**
  **71272 Renningen (DE)**
• **KUGLER, Susanne**
  **70469 Feuerbach (DE)**
• **DEY, Argha Protim**
  **70563 Stuttgart (DE)**

(56) Entgegenhaltungen:
**EP-A2- 1 253 491      EP-B1- 1 253 491**
**US-A1- 2012 330 627**

**Beschreibung**

Die Erfindung betrifft ein Verfahren zur Simulation einer Faserorientierung in einem Spritzgussbauteil aus einem faserverstärkten Kunststoff, wobei mit einer makroskopischen Simulation des Spritzgießens eine nach dem Spritzgießen vorliegende Orientierung der Fasern in dem herzustellenden Spritzgussbauteil bestimmt wird und wobei die makroskopische Simulation des Spritzgießens unter Verwendung makroskopischer physikalischer Parameter des faserverstärkten Kunststoffs erfolgt. Ein Weiterer Aspekt der Erfindung betrifft ein Auslegungsverfahren zum Auslegen eines Spritzgussbauteils aus einem faserverstärkten Kunststoff.

Stand der Technik

Kunststoffbauteile, insbesondere glasfaserverstärkte Kunststoffbauteile, werden vielfach in industriellen Anwendungen eingesetzt. Insbesondere im Automobilbereich wird eine Vielzahl von Bauteilen aus faserverstärkten Kunststoffen eingesetzt, wobei insbesondere faserverstärkte thermoplastische Kunststoffe zunehmend Bauteile aus Metall verdrängen. Durch die Faserverstärkung weisen die Kunststoffbauteile gute mechanische Eigenschaften bei verringertem Gewicht und Kosten auf. Insbesondere besteht die Möglichkeit, derartige Kunststoffbauteile schnell und preiswert über ein Spritzgussverfahren zu fertigen.

Bei dem Design derartiger faserverstärkter Kunststoffbauteile werden üblicherweise Computersimulationen eingesetzt, um das Versagensverhalten sowie die Lebenserwartung eines Kunststoffbauteils abschätzen zu können. Für das Verhalten der faserverstärkten Kunststoffbauteile ist die Anordnung und insbesondere die Orientierung der Fasern im fertigen Bauteil ein wichtiges Kriterium. Entsprechend ist ein wichtiger Bestandteil einer Simulation der Eigenschaften eines faserverstärkten Kunststoffbauteils, wie die Fasern in dem fertigen Bauteil verteilt, angeordnet und/oder ausgerichtet sind. Bei der Simulation von mittels Spritzguss gefertigten Bauteilen müssen insbesondere die Strömungsverhältnisse während des Füllvorgangs der Form berücksichtigt werden, da sich aus den Strömungsverhältnissen die spätere Orientierung der Fasern ergibt.

Für die Simulation der Faserorientierung sind komplexe mikromechanische Modelle (Mikro-Modelle) bekannt welche mit Simulationsmethodiken wie z.B. Diskreten Elemente Methode (DEM), der Smoothed Particle Methodik oder der moving particle semi-implicit (MPS) Methode arbeiten. Problematisch an diesen Simulationsmethodiken ist, dass diese sehr aufwendig sind und üblicherweise nur für kleine Referenzvolumen mit einer typischen Größe von 500 $\mu m^3$ durchgeführt werden können.

Für die Simulation des Spritzgussvorgangs stehen sogenannte Makro-Modelle bzw. makroskopische Modelle zur Verfügung. Diese makroskopischen Modelle zur Berechnung der Faserorientierung modellieren Effekte wie Diffusion, reduzierte Deformation, anisotrope Diffusion und Excluded Volume Effekte. Die Vorhersagegenauigkeit hängt dabei stark von den gewählten phänomenologischen Parametern (makroskopische physikalische Parameter) ab. Im Stand der Technik ist das pARD-RSC Modell bekannt. Das Modell wird in der Veröffentlichung H.-C. Tseng, R.-Y. Chang und C.-H. Hsu, "The use of principal spatial tensor to predict anisotropic fiber orientation in concentrated fiber suspensions", Journal of Rheology, Bd. 62, Nr. 1, pp. 312-320, 2017 beschrieben. Das Modell hängt von mindestens drei makroskopischen physikalischen Parametern ab, die Diffusion $C_I$, die Retarding-Rate $\kappa$ und den Grad der Anisotropie $\Omega$. Diese Parameter werden vor der Durchführung der Simulation global definiert.

Die Genauigkeit der Bestimmung der Faserorientierung beim Spritzguss durch die existierenden Makro-Modelle ist nicht ausreichend. Mikro-Modelle sind genauer, aber nicht umsetzbar in einer gängigen Finite-Elemente-Methode (FEM)-Simulation wegen des großen Rechenaufwands.

Im Stand der Technik sind Verfahren bekannt, bei denen über ein mikromechanisches Modell durch das Simulieren einer Scherung einer Materialzelle und anschließendem Fitten makroskopische physikalische Parameter für ein makroskopisches Modell erhalten werden. Ein derartiges Verfahren ist beispielsweise in S. K. Kugler et al. "Efficient parameter identification for macroscopic fiber orientation models with experimental data and a mechanistic fiber simulation", AIP Conference Proceedings 2205, 020050 (2020); https://doi.org/10.1063/1.5142965 beschrieben. Nachteilig hieran ist, dass in realen Spritzgussprozessen neben Scherflüssen auch Elongationsflüsse auftreten, welche über die bekannten Simulationsverfahren nicht berücksichtigt werden können.

Aus dem Dokument US 2012/330627 A1 ist ein Verfahren zur Bestimmung der Faserorientierung in einem Fluid mit Polymerketten beschrieben. Aus dem Dokument EP 1 253 491 A1 ist ein Verfahren zur Bestimmung von mechanischen Eigenschaften und von Verarbeitungseigenschaften eines Spritzgiessformteils bekannt.

Offenbarung der Erfindung

Es wird ein Verfahren zur Simulation einer Faserorientierung in einem Spritzgussbauteil aus einem faserverstärkten Kunststoff vorgeschlagen, wobei mit einer makroskopischen Simulation des Spritzgießens eine nach dem Spritzgießen vorliegende Orientierung der Fasern in dem herzustellenden Spritzgussbauteil bestimmt wird und wobei die makroskopische Simulation des Spritzgießens unter Verwendung makroskopischer physikalischer Parameter des faserverstärkten Kunststoffs erfolgt. Ferner ist vorgesehen, dass bei der makroskopischen Simulation eine zeitliche Entwicklung des Faserorientierungstensors $\dot{A}$ über eine Kombination aus zwei makroskopischen Modellen bestimmt wird, wobei eine erste zeitliche Entwicklung des Faserorientierungstensors $\dot{A}_s$ über ein erstes makroskopisches Modell auf Grundlage von Scherflüssen bestimmt wird und eine zweite zeitliche Entwicklung des Faserorientierungstensors $\dot{A}_e$ über ein zweites makroskopisches Modell auf Grundlage von Elongationsflüssen bestimmt wird.

Bevorzugt wird für die Simulation eine Geometrie des zu fertigenden Spritzgussbauteils bzw. der entsprechenden Spritzgussform vorgegeben. Des Weiteren werden für die Simulation bevorzugt Prozessparameter wie die Temperatur, bei der das Spritzgießen erfolgt, vorgegeben.

Der faserverstärkte Kunststoff umfasst dabei eine Vielzahl von Fasern, welche in einem Matrixmaterial eingebettet sind. Das Matrixmaterial ist dabei beispielsweise ein thermoplastischer Kunststoff.

Bei dem Matrixmaterial handelt es sich bevorzugt um einen thermoplastischen Kunststoff wie beispielsweise Polyetheretherketon (PEEK), Polyphenylensulfid (PPS), Polysulfon (PSU), Polyetherimid (PEI), Polytetrafluorethylen (PTFE), Polybutylenterephthalat (PBT) oder einem Polyamid (PA). Die Fasern sind beispielsweise ausgewählt aus anorganischen Fasern wie Glasfasern, organischen Fasern wie Aramidfasern oder Kohlenstofffasern oder Naturfasern.

Bei den Fasern kann es sich beispielsweise um Kurzfasern mit einer Länge kleiner 1000 $\mu$m, bevorzugt im Bereich von 100 $\mu$m bis 500 $\mu$m, handeln. Der Durchmesser $2r$ der Fasern liegt beispielsweise im Bereich von 5 $\mu$m bis 50 $\mu$m.

Die Materialeigenschaften des faserverstärkten Kunststoffs werden über die makroskopischen physikalischen Parameter der makroskopischen Modelle vorgegeben.

Der Faserorientierungstensor gibt die Hauptorientierungsrichtung der Fasern eines Ensembles von Fasern an, beispielsweise der Fasern einer bei der Simulation betrachteten Materialzelle, und ist gegeben durch

$$A_{ij}(t) = \frac{\sum_{n=1}^{N} p_{n,j}(t) p_{n,i}(t)}{N}$$

wobei $A_{ij}$ die Komponenten des Orientierungstensors sind, $p_n(t)$ die Position der Faser $n$ zur Zeit $t$ ist und $N$ die Anzahl der Fasern in dem betrachteten Ensemble angibt. Die Indizes $i$ und $j$ bezeichnen dabei die Komponenten des die Position der Faser beschreibenden Vektors $p$.

Bei der makroskopischen Simulation handelt es sich bevorzugt um eine Computersimulation, welche die Faserorientierung beim Spritzguss unter Verwendung eines makroskopischen Modells bestimmt. Bei dem makroskopischen Modell handelt es sich beispielsweise um das pARD-RSC Modell, es können jedoch zusätzlich oder alternativ auch andere makroskopische Modelle sowie Kombinationen mehrerer solcher Modelle eingesetzt werden, insbesondere RSC, ARD, pARD, MRD und/oder RPR.

Die Computersimulation kann beispielsweise unter Verwendung von Standardsoftware wie der Software Moldflow der Firma Autodesk oder der Open Source Software OpenFOAM erfolgen. Im Fall der Software Moldflow kann hierbei eine Anwenderschnittstelle (Solver API) verwendet werden, um das verwendete makroskopische Modell, insbesondere das pARD-RSC Modell, zu definieren. Anschließend kann die Faserorientierung in der Software mit dem selbst definierten Modell mit den makroskopischen physikalischen Parametern bestimmt und ausgerechnet werden.

Erfindungsgemäß ist bei dem Verfahren vorgesehen, dass eine Gewichtung des Einflusses des ersten Modells und des zweiten Modells auf die bei der Simulation bestimmte zeitliche Entwicklung des Faserorientierungstensors $\dot{A}$ auf Basis der Manas-Zloczower Zahl $M_z$ vorgenommen wird, wobei ein unterer Wert der Manas-Zloczower Zahl bevorzugt auf einen Wert von 0,5 begrenzt wird, was dem Fall eines reinen Scherflusses entspricht, und ein oberer Wert von 1 einem reinen Elongationsfluss entspricht.

Die Manas-Zlocower Zahl $M_z$ gibt eine Auskunft über die Art des Flusses. Ein Wert von 0 entspricht einer puren Rotation, ein Wert von 0,5 entspricht einer puren Scherung und ein Wert von 1 entspricht einer puren Elongation.

Für die Berechnung kann beispielsweise eine Formulierung von Cheng, J. J. und Manas-Zloczower, I. "Flow Field Characterization in a Banbury Mixer" International Polymer Processing, Band 5 Issue 3 Seiten 178-183., 1990 genutzt werden. Die Manas-Zloczower Zahl ist über die die dritte Invariante $\dot{\gamma}$ des Strain Rate Tensors D und die dritte Invariante $\dot{\omega}$ des Vorticity Tensors W definiert. Dabei ist der Strain Rate Tensor **D** als der symmetrische Teil des Geschwindigkeitsgradienten $\nabla u$ mit der Geschwindigkeit $u$ gegeben:

$$D = \frac{1}{2}\left(\nabla u + \nabla u^T\right)$$

$$\dot{\gamma} = \sqrt{\boldsymbol{D}\colon\boldsymbol{D}}$$

Der Vorticity Tensor ist als der schiefsymmetrische Teil des Geschwindigkeitsgradienten Vu mit der Geschwindigkeit u gegeben:

$$\boldsymbol{W} = \frac{1}{2}(\nabla\boldsymbol{u} - \nabla\boldsymbol{u}^T)$$

Um die dritte Invariante des Vorticity Tensors **W** zu berechnen, kann beispielsweise eine Formulierung von Krzysztof Tesch verwendet werden, welche in der Veröffentlichung K. Tesch, "On invariants of fluid mechanics tensors", Task Quarterly, Bd. 17, Nr. 3-4, pp. 1000-1008, 2013 beschrieben ist. Dazu wird der Spin Tensor $\overrightarrow{\varOmega}$ benötigt. Dieser berechnet sich wie folgt:

$$\overrightarrow{\varOmega} = \nabla \times \mathbf{u}$$

Die dritte Invariante $\dot{\omega}$ des Vorticity Tensors **W** ist dann über die Vektornorm des Spin Tensors $\overrightarrow{\varOmega}$ definiert.

Die Manas-Zloczower Zahl $M_z$ ist dann definiert durch

$$M_z = \frac{\dot{\gamma}}{\dot{\gamma} + \dot{\omega}}$$

Da rotationsdominierte Flüsse nicht zu den dominanten Flüssen im Spritzgießen zählen, wird bevorzugt der Wert 0,5 als eine untere Schranke für die Manas-Zloczower Zahl $M_z$ definiert, so dass alle Werte kleiner als 0,5 auf den Wert 0,5 gesetzt werden. Somit ergibt sich die zeitliche Entwicklung des Faserorientierungstensors $\dot{\boldsymbol{A}}$ über die Beziehung

$$\dot{\boldsymbol{A}} = 2(M_z - 0{,}5)\dot{\boldsymbol{A}}_e + 2(1 - M_z)\dot{\boldsymbol{A}}_s$$

Bevorzugt wird als makroskopisches Modell das pARD-RSC Modell eingesetzt, so dass entsprechend die erste zeitliche Entwicklung des Faserorientierungstensors $\dot{\boldsymbol{A}}_s$ sowie die zweite zeitliche Entwicklung des Faserorientierungstensors $\dot{\boldsymbol{A}}_e$ jeweils über das pARD-RSC Modell bestimmt werden. Alternativ oder zusätzlich können auch weitere dem Fachmann bekannte Modelle eingesetzt werden.

Die durch das pARD-RSC Modell bestimmte zeitliche Entwicklung des Faserorientierungstensors $\dot{\boldsymbol{A}}^{pARD\text{-}RSC}$ ist dabei durch das pARD-RSC Modell vorgegeben, wobei das Modell beispielsweise in H.-C. Tseng, R.-Y. Chang und C.-H. Hsu, "The use of principal spatial tensor to predict anisotropic fiber orientation in concentrated fiber suspensions", Journal of Rheology, Bd. 62, Nr. 1, pp. 312-320, 2017 beschrieben wird.

Die durch das pARD-RSC Modell bestimmte zeitliche Entwicklung des Faserorientierungstensors $\dot{\boldsymbol{A}}^{pARD\text{-}RSC}$ hat die Form

$$\dot{\boldsymbol{A}}^{pARD-RSC}$$
$$= (\boldsymbol{W}\cdot\boldsymbol{A} - \boldsymbol{A}\cdot\boldsymbol{W}) + \zeta\{\boldsymbol{D}\cdot\boldsymbol{A} + \boldsymbol{A}\cdot\boldsymbol{D} - 2[\mathbb{A} + (1-\kappa)(\mathbb{L}-\mathbb{M}\colon\mathbb{A})]\colon\boldsymbol{D}\}$$
$$+ \dot{\gamma}\{2[\boldsymbol{C} - (1-\kappa)\mathbb{M}\colon\boldsymbol{C}] - 2\kappa(tr\,\boldsymbol{C})\boldsymbol{A} - 5(\boldsymbol{C}\cdot\boldsymbol{A} + \boldsymbol{A}\cdot\boldsymbol{C})$$
$$+ 10[\mathbb{A} + (1-\kappa)(\mathbb{L}-\mathbb{M}\colon\mathbb{A})]\colon\boldsymbol{C}\}$$

Dabei bezeichnet tr C die Spur der Diffusionsmatrix C. In einer Variante des pARD-RSC Modells wird die Diffusionsmatrix C über die Diffusion $C_I$, und den Grad der Anisotropie Ω beschrieben:

$$\boldsymbol{C} = C_I \boldsymbol{R}_A \begin{pmatrix} 1 & 0 & 0 \\ 0 & \varOmega & 0 \\ 0 & 0 & 1-\varOmega \end{pmatrix} \boldsymbol{R}_A^T$$

In dieser Ausführungsform umfasst das makroskopische Modell die drei makroskopischen physikalischen Parameter $C_I$, $\Omega$ und $\kappa$. Alternativ dazu kann anstelle des Parameters Anisotropie $\Omega$ auch ein komplexeres Modell mit den Parametern D1, D2 und D3 gewählt werden:

$$\boldsymbol{C} = C_I \boldsymbol{R}_A \begin{pmatrix} D_1 & 0 & 0 \\ 0 & D_2 & 0 \\ 0 & 0 & D_3 \end{pmatrix} \boldsymbol{R}_A^T$$

Bevorzugt wird das pARD-RSC Modell mit den vier makroskopischen physikalischen Parametern $C_I$, $D_2$, $D_3$ und $\kappa$ verwendet. $D_1$ wird dabei auf den Wert 1 gesetzt, um eine Überbestimmtheit zu vermeiden.

Dabei ist $R_A$ eine Eigenmatrix, welche definiert ist über

$$\boldsymbol{A} = \boldsymbol{R}_A \begin{pmatrix} \lambda_1 & 0 & 0 \\ 0 & \lambda_2 & 0 \\ 0 & 0 & \lambda_3 \end{pmatrix} \boldsymbol{R}_A^T$$

Die Tensoren $\mathbb{L}$ und $\mathbb{M}$ des pARD-RSC Modells haben die Form

$$\mathbb{L} = \sum_{i=1}^3 \lambda_i \boldsymbol{e}_i \boldsymbol{e}_i \boldsymbol{e}_i \boldsymbol{e}_i$$

$$\mathbb{M} = \sum_{i=1}^3 \boldsymbol{e}_i \boldsymbol{e}_i \boldsymbol{e}_i \boldsymbol{e}_i$$

mit den Eigenvektoren $e_i$.

Der Parameter Z ist dabei der Formfaktor, welcher über das Faseraspektverhältnis $r_e$ gegeben ist durch

$$\zeta = \frac{r_e^2 - 1}{r_e^2 + 1}$$

Bevorzugt ist entsprechend die erste zeitliche Entwicklung des Faserorientierungssensors gegeben durch

$$\dot{\boldsymbol{A}}_s = \dot{\boldsymbol{A}}_s^{pARD-RSC}(C_I^s, D_2^s, D_3^s, \kappa^s)$$

mit den ersten makroskopischen physikalischen Parametern $C_I^s, D_2^s, D_3^s$, $\kappa^s$ und beschreibt den durch die Scherflüsse getriebenen Anteil der zeitlichen Entwicklung der Faserorientierung. Die zweite zeitliche Entwicklung des Faserorientierungstensors ist entsprechend gegeben durch

$$\dot{\boldsymbol{A}}_e = \dot{\boldsymbol{A}}_e^{pARD-RSC}(C_I^e, D_2^e, D_3^e, \kappa^e)$$

mit den zweiten makroskopischen physikalischen Parametern $C_I^e, D_2^e, D_3^e$, $\kappa^e$ und beschreibt den durch die Elongationsflüsse getriebenen Anteil der Entwicklung des Faserorientierungstensors.

Die ersten makroskopischen physikalischen Parameter für das erste makroskopische Modell und/oder die zweiten makroskopischen physikalischen Parameter für das zweite makroskopische Modell können beispielsweise über experimentell ermittelte Daten bestimmt werden.

Eine experimentelle Bestimmung der makroskopischen physikalischen Parameter für den durch Scherflüsse getriebenen Anteil der Entwicklung des Faserorientierungstensors kann zum Beispiel über ein Sliding Plate Experiment erfolgen, wie es in der Veröffentlichung S. Kugler et al. "Macroscopic fiber orientation model evaluation for concentrated short fiber reinforced polymers in comparison to experimental data", Polymer Composites, 2020 beschrieben ist.

Eine experimentelle Bestimmung der makroskopischen physikalischen Parameter für den durch Elongationsflüsse getriebenen Anteil der Entwicklung des Faserorientierungstensors kann zum Beispiel über die Betrachtung eines geschmierten Quetschflusses durch einen rechteckigen Kanal erhalten werden, wie in der Veröffentlichung G. Lambert et al. "Evaluating Rigid and Semiflexible Fiber Orientation Evolution Models in Simple Flows", Journal of Manufacturing Science and Engineering, Transactions of the ASME, Bd. 139, Issue 3, 03 2017 beschrieben.

Alternativ oder zusätzlich ist es möglich, die ersten makroskopischen physikalische Parameter für das erste makroskopische Modell und/oder die zweiten makroskopischen physikalische Parameter für das zweite makroskopische Modell über eine mikromechanische Simulation zu ermitteln.

Zum Bestimmen der makroskopischen physikalischen Parameter aus experimentellen Daten oder aus Daten einer mikromechanischen Simulation kann beispielsweise ein Fit-Algorithmus bzw. ein Anpassungs-Algorithmus verwendet werden, der die entsprechenden Parameter des makroskopischen Modells derart anpasst, dass die vom makroskopischen Modell getroffene Vorhersage des zeitlichen Verlaufs des Orientierungstensors so gut wie möglich dem über die Simulation bzw. über das Experiment bestimmten zeitlichen Verlauf des Orientierungstensors entspricht. Der prinzipielle Ablauf des Bestimmens makroskopischer physikalischer Parameter aus einer mikromechanischen Simulation ist beispielsweise in S. K. Kugler et al. "Efficient parameter identification for macroscopic fiber orientation models with experimental data and a mechanistic fiber simulation", AIP Conference Proceedings 2205, 020050 (2020); https://doi.org/10.1063/1.5142965 beschrieben.

Bevorzugt wird die mikromechanische Simulation unter Verwendung der Diskreten Elemente Methode (DEM), der Smoothed Particle Methodik oder der moving particle semi-implicit (MPS) Methode durchgeführt.

Bevorzugt umfasst das Ermitteln der ersten und/oder der zweiten makroskopischen physikalischen Parameter unter Verwendung eines mikromechanischen Modells ein Verfahren mit folgendem Ablauf:
In einem Schritt a) erfolgt ein Bilden einer Materialzelle mit einem Ensemble aus einzelnen Fasern, welche in einem Matrixmaterial eingebettet sind, wobei der Faservolumengehalt und die Faserlänge als Eingabewerte vorgegeben werden.

In einem nachfolgenden Schritt b) erfolgt ein Durchführen einer mikromechanischen Simulation, bei der die Materialzelle mit einer vorgegebenen Scherrate für einen vorgegebenen Zeitraum geschert wird oder mit einer vorgegebenen Elongationsrate gestreckt wird, wobei bei jedem Zeitschritt der Simulation zumindest die Positionen der Fasern des Ensembles bestimmt werden, wobei bei der mikromechanischen Simulation Interaktionskräfte zwischen jeweils zwei Fasern bestimmt werden, wobei für zumindest einen Teil der Faser-Faser Interaktionen eine Roh-Interaktionskraft über ein trainiertes Maschinenlernmodell mit den Eingabeparametern Interaktionswinkel, Faseraspektverhältnis und der Distanz zwischen den Fasern bestimmt wird und die Interaktionskraft unter Verwendung einer linearen Beziehung zwischen der Viskosität des Matrixmaterials und der Relativgeschwindigkeit zwischen den Fasern aus der Roh-Interaktionskraft bestimmt wird

Im Schritt a) des Verfahrens wird als Vorbereitung für die mikromechanische Simulation eine Materialzelle gebildet, welche ein Ensemble von einzelnen Fasern umfasst. Die Materialzelle wird beispielsweise in einem Speicher eines Computers abgelegt, welcher die nachfolgende mikromechanische Simulation durchführt. Die Materialzelle wird in Abhängigkeit der Eingabeparameter der Simulation gebildet, welche den Faservolumengehalt und die Faserlänge umfassen. Diese Eingabewerte repräsentieren das zu simulierende faserverstärkte Kunststoffmaterial. Insbesondere für eine Normierung der Parameter kann als Eingabewert des Weiteren der Faserdurchmesser angegeben werden und/oder ein Faseraspektverhältnis angegeben werden. Die Anzahl der Fasern und/oder die Größe der Materialzelle sind bevorzugt derart gewählt, dass die Simulation ausreichend aussagekräftig ist und gleichzeitig der Rechenaufwand begrenzt bleibt. Beispielsweise umfasst das gebildete Ensemble im Scherfluss im Bereich von 100 bis 1000 Fasern. Z.B. werden 500 einzelne Fasern für das Ensemble generiert. Im Elongationsfluss sind Ensemble im Bereich von 1000 bis 20000 Fasern üblich.

Bei dem Bilden des Ensembles werden die vorgegebenen Parameter wie der Faservolumengehalt, die Faserlänge und/oder der Faserdurchmesser bzw. ein Faseraspektverhältnis berücksichtigt. Dabei können alle Fasern des Ensembles die gleiche Länge und/oder den gleichen Durchmesser aufweisen. Bevorzugt ist jedoch vorgesehen, dass für die Faserlänge und/oder den Faserdurchmesser eine Verteilungsfunktion vorgegeben wird. Wird ein Faseraspektverhältnis vorgegeben, so kann auch dieser in Form einer Verteilungsfunktion angegeben werden. Die Verteilungsfunktion kann beispielsweise eine Normalverteilung mit einem Mittelwert und einer Standardabweichung sein. Jedoch sind auch andere Verteilungsfunktionen wie beispielsweise eine bimodale Verteilung möglich, wenn beispielsweise zwei verschiedene Fasertypen mit jeweils verschiedenen Längen und/oder Durchmessern eingesetzt werden. Ein geeigneter Algorithmus zum Bilden einer Materialzelle mit einem Ensemble von Fasern ist beispielsweise in der Veröffentlichung M. Schneider, "The sequential addition and migration method to generate representative volume elements for the homogenization of short fiber reinforced plastics," Computational Mechanics, Bd. 59, Nr. 2, pp. 247-263, 2017 beschrieben. Bevorzugt wird die Zelle kubisch für die Schersimulation ausgestaltet und so gewählt, dass diese an allen Seiten periodische Randbedingungen aufweist. Für die Elongationssimulation werden rechteckige Zellen mit einer bis zu fünf Mal größeren Höhe als Breite genutzt.

Im Schritt b) des Verfahrens wird die mikromechanische Simulation durchgeführt. Im Fall der Bestimmung der makroskopischen physikalischen Parameter für den durch Scherflüsse getriebenen Anteil wird die zuvor in Schritt a) gebildete Materialzelle mit einer vorgegebenen Scherrate für einen vorgegebenen Zeitraum geschert wird. Eine geeignete Scherrate ist beispielsweise 1 s$^{-1}$ und ein geeigneter Zeitraum ist beispielsweise 100 s.

Im Fall der Bestimmung der makroskopischen physikalischen Parameter für den durch Elongationsflüsse getriebenen Anteil wird die zuvor in Schritt a) gebildete Materialzelle mit einer vorgegebenen Elongationsrate gestreckt. Eine geeignete Elongationsrate ist beispielsweise 0,05 s$^{-1}$ und ein geeigneter Zeitraum ist beispielsweise 100 s.

Die Simulation wird dabei schrittweise durchgeführt, wobei jedem Zeitschritt eine bestimmte Zeitspanne der Simulation entspricht. Die Zeitschrittweite wird in dem Modell bevorzugt numerisch angepasst über eine adaptive Schrittweitensteuerung.

Die Eingabeparameter der mikromechanischen Simulation umfassen neben der zuvor gebildeten Materialzelle die Viskosität des Matrixmaterials. Das Matrixmaterial ist ein Polymer, bevorzugt ein thermoplastisches Polymer, und die Fasern des Ensembles sind in dem Matrixmaterial eingebettet. Da die Viskosität des Matrixmaterials ein temperaturabhängiger Parameter ist, wird für das Durchführen der Simulation bevorzugt die Viskosität für die Temperatur angegeben die bei dem Spritzguss des faserverstärkten Kunststoffs verwendet werden soll. Die Viskosität ist auch von der Scherrate abhängig und wird bevorzugt für die bei der Simulation gewählte Scherrate vorgegeben.

Die mikromechanische Simulation umfasst ein Interaktionsmodell für die Fasern in dem viskosen Matrixmaterial. In der Simulation wird in jedem Zeitschritt zumindest die Position jeder Faser des Ensembles berechnet, wobei bevorzugt die Einwirkung der hydrodynamischen, Interaktions- und elastischen Kräfte berücksichtigt werden.

Neben den Positionen der Fasern des Ensembles werden bevorzugt auch weitere Parameter wie die Geschwindigkeiten, die Winkelausrichtungen und/oder die Winkelgeschwindigkeiten der Fasern berechnet. Auch Kombinationen mehrerer dieser Parameter oder die Berechnung aller der genannten Parameter sind möglich.

Für die Simulation können die einzelnen Fasern beispielsweise als eine Kette von zylindrischen Stäben repräsentiert werden, welche über Kugelgelenke miteinander verbunden sind. Ein ähnliches Modell ist beispielsweise aus der Veröffentlichung S. Linström und T. Uesaka, "Simulation of the motion of flexible fibers in viscous fluid flow," Physics of Fluids, Bd. 19, Nr. 11, p. 113307, 2007 bekannt.

Das trainierte Maschinenlernmodell verknüpft die Eingabeparameter Interaktionswinkel, Faseraspektverhältnis und die Distanz zwischen den Fasern mit der entsprechenden Interaktionskraft für diese Eingabeparameter. Die Eingabeparameter werden dabei bevorzugt zunächst normiert, wobei hierzu bevorzugt die maximale durch die mikromechanische Simulation betrachtete Distanz d zwischen zwei Fasern verwendet wird. Diese maximale betrachtete Distanz d wird bevorzugt in Relation zum Durchmesser 2r der Fasern angegeben. Wenn die Fasern eine Durchmesserverteilung aufweisen, wird hier bevorzugt der mittlere Faserdurchmesser als Bezugsgröße verwendet.

Das Maschinenlernmodell wird für Eingabeparameter mit einer konstanten Viskosität $\eta$ des Matrixmaterials und einer konstanten relativen Geschwindigkeit $v_{rel}$ zwischen den beiden beteiligten Fasern trainiert, so dass das Maschinenlernmodell als Ausgabewert eine Roh-Interaktionskraft ausgibt. Interaktionskräfte für eine andere Viskosität und/oder eine andere relative Geschwindigkeit werden über den linearen Zusammenhang zwischen der Interaktionskraft und Viskosität und Relativgeschwindigkeit aus der Roh-Interaktionskraft bestimmt.

Bevorzugt berücksichtigen die Interaktionskräfte die Lubrikationskräfte zwischen jeweils zwei Fasern. Des Weiteren werden bevorzugt Kräfte bei einem mechanischen Kontakt im Übergangsbereich der Oberflächenrauheit und Kräfte bei mechanischem Kontakt berücksichtigt. Der Übergangsbereich der Oberflächenrauheit umfasst Abstände zwischen jeweils zwei Fasern im Bereich von etwa 1 $\mu$m.

Geeignete Modelle für die Berücksichtigung der Interaktionskräfte im Übergangsbereich der Oberflächenrauheit und der Kräfte bei mechanischem Kontakt sind aus S. Linström und T. Uesaka, "Simulation of the motion of flexible fibers in viscous fluid flow," Physics of Fluids, Bd. 19, Nr. 11, p. 113307, 2007 bekannt.

Für die Berücksichtigung der Lubrikationskräfte sind analytische Modelle nur für zwei Sonderfälle bekannt. In einem ersten Sonderfall werden die beiden beteiligten Fasern als zwei parallel ausgerichtete Zylinder mit einer Länge L angesehen. Ein analytisches Modell für den ersten Sonderfall ist aus J. Kromkamp et al., "Shear-induced self-diffusion and microstructure in non-Brownian suspensions at non-zero Reynolds numbers," Journal of Fluid Mechanics, Bd. 529, pp. 253-278, 2005 bekannt.

In einem zweiten Sonderfall werden die beiden beteiligten Fasern als zwei unendlich lange Zylinder mit einem Kontaktwinkel a>0 angesehen. Ein analytisches Modell für den zweiten Sonderfall ist aus Y. Yamane et al., "Numerical simulation of semi-dilute suspensions of rodlike particles in shear flow," Journal of Non-Newtonian Fluid Mechanics, Bd. 54, pp. 405-421, 1994 bekannt.

Entspricht die jeweilige Situation der beiden Fasern keinem dieser beiden Sonderfälle, beispielsweise weil es sich um kurze Fasern handelt, welche nicht parallel zueinander ausgerichtet sind, werden bevorzugt zumindest in diesen Fällen die Interaktionskräfte unter Verwendung eines trainierten Maschinenlernmodells ermittelt.

Bevorzugt werden zum Trainieren des Maschinenlernmodells analytische Lösungen für die Lubrikationskräfte und/oder numerische Lösungen für die Lubrikationskräfte als Trainingsdaten verwendet, wobei die Trainingsdaten jeweils eine Interaktionskraft den drei Eingabeparametern Interaktionswinkel, Faseraspektverhältnis und der Distanz zwischen den Fasern zuordnen.

Für das Erhalten numerischer Lösungen für die Lubrikationskräfte kann beispielsweise eine vollgekoppelte numerische Strömungsmechanik (englisch Computational Fluid Dynamics, CFD) Partikel Simulation für zwei Fasern in dem viskosen Matrixmaterial durchgeführt werden. Bei einer solchen Simulation werden die Einstellparameter variiert, wobei die Einstellparameter insbesondere Interaktionswinkel, Faserlänge, Faserdurchmesser und Abstand zwischen den Fasern umfassen können. Anstelle von Faserlänge und Faserdurchmesser kann auch bevorzugt ein Faseraspektverhältnis (Länge geteilt durch Durchmesser) variiert werden.

Der Interaktionswinkel wird dabei bevorzugt über den vollständigen Bereich von 0° bis 90° variiert. Die Abmessungen der Fasern, also deren Länge und/oder Durchmesser und damit deren Aspektverhältnis, werden bevorzugt in dem Bereich variiert, in dem die Abmessungen der für den Spritzguss verwendeten Fasern liegen. Der Abstand zwischen den Fasern wird bevorzugt im Bereich vom mechanischen Kontakt der Fasern bis zu einem Abstand, der dem Durchmesser der Fasern entspricht, betrachtet. Typischerweise wird daher die Simulation für die Annäherung für kleine Distanzen im Bereich des Faserdurchmessers (typischerweise $10\,\mu$m) betrachtet.

Die Simulation kann des Weiteren verwendet werden, um die lineare Beziehung zur Viskosität des Matrixmaterials und der Relativgeschwindigkeit zu bestätigen. In diesem Fall können diese Parameter ebenfalls bei der Simulation variiert werden.

In einem Beispiel wurde unter Verwendung der COMSOL Multiphysics® Modellierungssoftware eine vollgekoppelte CFD Partikelsimulation für zwei Fasern in viskosem Matrixmaterial durchgeführt, wobei die Parameter Interaktionswinkel, Faserlänge, Matrixviskosität und Relativgeschwindigkeit zwischen den Fasern wie beschrieben variiert wurden. Mit den gewonnenen Simulationsdaten wurden die analytischen Beziehungen überprüft und es konnte gezeigt werden, dass die Interaktionskräfte linear zur Relativgeschwindigkeit und zur Viskosität des Matrixmaterials sind. Die Abhängigkeit von Interaktionswinkel, Faserlänge und Distanz zwischen den Fasern ist nichtlinear.

Bevorzugt werden die unter Verwendung der mikromechanischen Simulation erhaltenen Beziehungen zwischen Interaktionskraft und den Eingabeparametern als Trainingsdaten für das Maschinenlernmodell verwendet. Alternativ oder zusätzlich können die für die beiden beschriebenen Sonderfälle bekannten analytischen Lösungen verwendet werden, um Trainingsdaten für das Maschinenlernmodell zu erstellen. Auch in diesem Fall werden die Eingabeparameter der analytischen Lösungen variiert, um für verschiedene Kombinationen von Eingabeparametern die entsprechenden Interaktionskräfte zu erhalten.

Dabei ist es bevorzugt, dass für den Fall, dass die Trainingsdaten nur numerische Lösung umfassen, die Interaktion zwischen zwei Fasern abhängig von Interaktionswinkel und Faserlänge in mehrere Klassen unterteilt wird, wobei für mindestens eine der Klassen die Interaktionskraft analytisch berechnet wird und für mindestens eine weitere Klasse die Interaktionskraft unter Verwendung des trainierten Maschinenlernmodells bestimmt wird.

Insbesondere können, wenn die Trainingsdaten nur numerische Lösungen umfassen, die Interaktionen in drei verschiedene Klassen abhängig vom Interaktionswinkel und der Faserlänge aufgeteilt werden. Die ersten beiden Klassen entsprechen dabei den beiden beschriebenen Sonderfällen, für die jeweils analytische Lösungen existieren. Somit entspricht die erste Klasse dem ersten Sonderfall, bei dem die Fasern parallel verlaufen, der Interaktionswinkel $\alpha$ somit 0 ist. Die zweite Klasse entspricht dem zweiten Sonderfall, bei dem die Fasern sehr lang sind, so dass diese als unendlich langer Zylinder aufgefasst werden können. Die dritte Klasse entspricht dann kurzen Fasern, welche nicht parallel zueinander verlaufen.

Eine besonders einfache Unterteilung in zwei Klassen kann allein über den Interaktionswinkel erfolgen. Dabei wird für den Fall, dass der Interaktionswinkel 0° oder näherungsweise 0° ist (erster Sonderfall) auf die analytische Lösung zurückgegriffen. In allen anderen Fällen wird auf die numerische Lösung über das künstliche neuronale Netz zurückgegriffen.

Umfassen die Trainingsdaten sowohl numerische Lösungen als auch analytische Lösungen, so ist es bevorzugt, dass die Interaktionskräfte aller Faser-Faser Interaktionen unter Verwendung des trainierten Maschinenlernmodells bestimmt werden.

Das Maschinenlernmodell ist bevorzugt als ein künstliches neuronales Netz ausgestaltet. Ein solches künstliches neuronales Netz weist üblicherweise eine Eingabeschicht und eine Ausgabeschicht auf, wobei sich zwischen der Eingabe- und der Ausgabeschicht eine oder mehrere Zwischenschichten befinden können. Die Eingabeschicht nimmt die Eingabewerte entgegen und die Ausgabeschicht gibt den oder die Ausgabewerte aus.

Das vorgeschlagene künstliche neuronale Netz weist bevorzugt eine Eingabeschicht mit drei Eingabewerten auf. Ein erster Eingabewert ist bevorzugt ein normierter Interaktionswinkel, welcher auf das Intervall [0,1] normiert wurde, beispielsweise durch Anwenden der Funktion sin(a) (Interaktionswinkel $\alpha$ zwischen 0° und 90°). Ein zweiter Eingabewert ist bevorzugt eine Faserlänge, welche unter Verwendung der maximal betrachteten Distanz normiert wird. Durch die Wahl des Faserdurchmessers 2r als maximal betrachtete Distanz ergibt sich, dass der zweite Eingabewert ein Aspektverhältnis L/(2r) aus der Faserlänge L und dem Faserdurchmesser 2r ist. Ein dritter Eingabewert ist eine normierte Distanz d/(2r) (mit der Distanz d zwischen den beiden Fasern und der maximalen betrachteten Distanz von 2r).

Für eine Aktivierungsfunktion des künstlichen neuronalen Netzes kann es günstiger sein, wenn die Eingabewerte um 0 verteilt sind. Entsprechend erfolgt bevorzugt eine analytische Streckung der Eingabewerte auf das Intervall [-1,1], zum Beispiel durch Anwenden einer Funktion wie f(x)=2x-1. Am günstigsten wären auf das Intervall [-1,1] normierte Eingabewerte mit einer Standardabweichung 1.

Das vorgeschlagene künstliche neuronale Netz weist bevorzugt eine Ausgabeschicht mit einem Ausgabewert auf. Der Ausgabewert ist dabei bevorzugt eine Roh-Interaktionskraft, welche den Eingabewerten normierter Interaktionswinkel, normierte Faserlänge (bzw. Aspektverhältnis) und normierte Distanz zugeordnet wird.

Das Trainieren des künstlichen neuronalen Netzes kann unter Verwendung der Trainingsdaten beispielsweise über ein überwachtes Lernen erfolgen, wobei ausgenutzt wird, dass das gewünschte Ergebnis (die Roh-Interaktionskraft) für die entsprechenden Eingabeparameter aus dem Trainingsdatensatz bekannt ist. Bevorzugt wird bei dem Trainieren auf einen Trainingsdatensatz zurückgegriffen, der numerisch erhaltene Lösungen für die Roh-Interaktionskraft umfasst.

Ein Weiterer Aspekt der Erfindung betrifft ein Auslegungsverfahren zum Auslegen eines Spritzgussbauteils aus einem faserverstärkten Kunststoff, wobei eine Simulation der Faserorientierung mit einem der hierin beschriebenen Verfahren durchgeführt wird, eine Belastbarkeit des Spritzgussbauteils bestimmt wird und die bestimmte Belastbarkeit mit einer vorgegebenen Belastbarkeit verglichen wird.

Wird erkannt, dass das Bauteil den Anforderungen nicht genügt, ist es bevorzugt geometrische Parameter des Spritzgussbauteils wie eine Wandstärke zu verändern, insbesondere zu vergrößern, und die Simulation erneut durchzuführen. Ebenso kann vorgesehen sein, dass die Simulation mit veränderten geometrischen Parametern wiederholt wird, wenn die Belastbarkeit des Spritzgussbauteils die Anforderungen um mehr als einen vorgegebenen Grenzwert übertrifft. Hierdurch kann der Materialbedarf optimiert werden, indem beispielsweise eine Wandstärke des Spritzgussbauteils verringert wird.

Vorteile der Erfindung

Das vorgeschlagene hybride Modell, welches ein erstes makroskopisches Modell auf Grundlage von Scherflüssen mit einem zweiten makroskopischen Modell auf Grundlage von Elongationsflüssen kombiniert, können die beim Spritzguss vorliegenden Bedingungen präzise erfasst und somit eine verbesserte Genauigkeit bei der Bestimmung der Faserorientierung in dem Spritzgussbauteil erreichen.

Durch die verbesserte Genauigkeit der Simulation kann diese insbesondere bei der Auslegung und dem Entwurf von Spritzgussbauteilen aus faserverstärkten Kunststoffen verwendet werden. Beispielsweise können bei der Auslegung in Reaktion auf die Ergebnisse der Simulation geometrische Abmessungen des Spritzgussbauteils wie eine Wandstärke optimiert werden.

Vorteilhafterweise können die verwendeten makroskopischen physikalischen Parameter mit einer mikromechanischen Simulation ermittelt werden, so dass sich die Simulation bzw. die dazu verwendeten makroskopischen Modelle schnell an veränderte Materialien anpassen lassen, wobei insbesondere der Faservolumengehalt, die Faserlänge sowie das Matrixmaterial schnell angepasst werden können. Der Designprozess für entsprechende Bauteile aus faserverstärktem Kunststoff wird vereinfacht und eine Prognose über die Haltbarkeit des Bauteils wird verbessert.

Kurze Beschreibung der Zeichnungen

Ausführungsformen der Erfindung werden anhand der Zeichnungen und der nachfolgenden Beschreibung näher erläutert.

Es zeigen:

Figur 1    ein schematisches Ablaufdiagramm eines Ausschnitts des Verfahrens zur Simulation einer Faserorientierung in einem Spritzgussbauteil aus einem faserverstärkten Kunststoff und

Figur 2    eine schematische Darstellung eines künstlichen neuronalen Netzes zur Verwendung in einer mikromechanischen Simulation.

Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

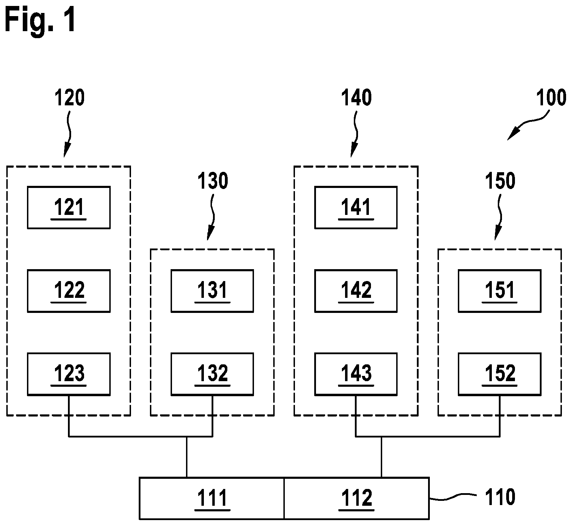

Figur 1 zeigt ein schematisches Ablaufdiagramm mit einem Ausschnitt eines Verfahrens 100 zur Simulation einer Faserorientierung in einem Spritzgussbauteil aus einem faserverstärkten Kunststoff. Der in Figur 1 gezeigte Ausschnitt des Verfahrens 100 zeigt den Ablauf des Bestimmens von makroskopischen physikalischen Parametern für die Verwendung in einem hybriden makroskopischen Modell 110, welches ein erstes makroskopisches Modell 111 und ein zweites makroskopisches Modell 112 umfasst.

Das erste makroskopische Modell 111 wird zur Bestimmung einer ersten zeitlichen Entwicklung des Faserorientierungstensors $\dot{A}_s$ verwendet, wobei das erste makroskopische Modell 111 die Entwicklung auf Grundlage von Scherflüssen bestimmt. Das zweite makroskopische Modell 112 wird zur Bestimmung einer zweiten zeitlichen Entwicklung des Faserorientierungstensors $\dot{A}_e$ verwendet, wobei das zweite makroskopische Modell 112 die Entwicklung auf Grundlage von Elongationsflüssen bestimmt.

Das erste makroskopische Modell 111 verwendet als Eingabeparameter erste makroskopische physikalische Parameter und das zweite makroskopische Modell 112 verwendet als Eingabeparameter zweite makroskopische physikalische Parameter. Diese Parameter können jeweils durch eine mikromechanische Simulation 120, 140 oder durch das Durchführen von experimentellen Untersuchungen 130, 150 erhalten werden.

Über eine erste mikromechanische Simulation 120 können die ersten makroskopischen Parameter für das erste makroskopische Modell 111 erhalten werden, indem in einem Materialzellenbestimmungsschritt 121 eine für ein bestimmtes vorgegebenes faserverstärktes Kunststoffmaterial eine Materialzelle mit einem Ensemble aus einzelnen Fasern gebildet wird. Als Eingabewerte dienen hier der Faservolumengehalt, die Faserlänge sowie die Viskosität des Matrixmaterials bei der vorgegebenen Scherrate und bei der Temperatur, bei der der Spritzguss erfolgen soll. Die Materialzelle ist bevorzugt kubisch und besitzt an allen Seiten periodische Randbedingungen.

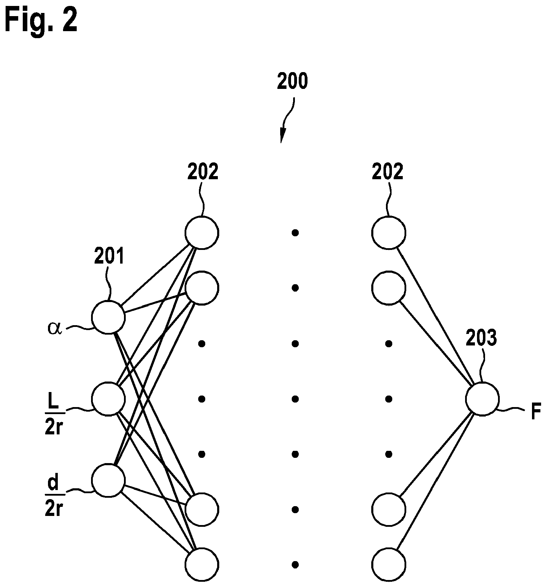

In einem nachfolgenden Simulationsschritt 122 wird die Entwicklung der Faserorientierung in der Materialzelle mikromechanisch simuliert. Dabei wird die erstellte Materialzelle beispielsweise für 100 s mit einer Scherrate von 1 s$^{-1}$ geschert. Das Simulieren erfolgt beispielsweise auf der Basis der Diskreten Element Methode (DEM), wobei ein Interaktionsmodell für Faser-Faser Interaktionen in einem viskosen Medium angepasst ist. In der Simulation wird in jedem Zeitschritt die Position jeder Faser berechnet, wobei insbesondere Interaktionskräfte zwischen jeweils zwei Fasern berücksichtigt werden. Für das Bestimmen dieser Interaktionskräfte wird bevorzugt zumindest für einen Teil der Faser-Faser Interaktionen ein trainiertes Maschinenlernmodell verwendet, welches beispielsweise als ein künstliches neuronales Netz 200 ausgestaltet ist, vergleiche Figur 2. Bei jedem Zeitschritt werden über das mikromechanische Modell zumindest die Positionen der Fasern der Materialzelle berechnet.

In einem Nachbearbeitungsschritt 123 wird aus den Positionen der Fasern der Orientierungstensor zweiter Ordnung berechnet. Der Orientierungstensor gibt dabei die Hauptorientierungsrichtung der Gesamtheit aller Fasern der Materialzelle an. Des Weiteren werden aus der zeitlichen Entwicklung der Komponenten des Orientierungstensors über beispielsweise ein Fit-Algorithmus bzw. ein Anpassungs-Algorithmus der optimale Fit für die ersten makroskopischen physikalischen Parameter des ersten makroskopischen Modells 111 berechnet.

Im Fall einer ersten experimentellen Untersuchung 130 wird in einem ersten Untersuchungsschritt 131 beispielsweise ein Sliding-Plate Experiment an einer Probe des faserverstärkten Kunststoffs durchgeführt. Die Orientierung der Fasern wird anschließend vermessen.

In einem Nachbearbeitungsschritt 132 wird aus den gemessenen Positionen der Fasern der Orientierungstensor zweiter Ordnung berechnet. Der Orientierungstensor gibt dabei die Hauptorientierungsrichtung der Gesamtheit aller Fasern der Materialzelle an. Des Weiteren werden aus der zeitlichen Entwicklung der Komponenten des Orientierungstensors über beispielsweise ein Fit-Algorithmus bzw. ein Anpassungs-Algorithmus der optimale Fit für die ersten makroskopischen physikalischen Parameter des ersten makroskopischen Modells 111 berechnet.

Über eine zweite mikromechanische Simulation 140 können die zweiten makroskopischen Parameter für das zweite makroskopische Modell 112 erhalten werden, indem in einem Materialzellenbestimmungsschritt 141 wie bereits mit Bezug zu den ersten makroskopischen physikalischen Parametern beschrieben für ein bestimmtes vorgegebenes faserverstärktes Kunststoffmaterial eine Materialzelle mit einem Ensemble aus einzelnen Fasern gebildet wird. Als Eingabewerte dienen hier der Faservolumengehalt, die Faserlänge sowie die Viskosität des Matrixmaterials und die Temperatur bei den Prozessbedingungen, bei denen der Spritzguss erfolgen soll. Die Materialzelle ist bevorzugt rechteckig mit einer bis zu fünf Mal größeren Höhe als Breite und besitzt an vier Seiten Wände und an zwei Seiten offene Randbedingungen.

In einem nachfolgenden Simulationsschritt 142 wird die Entwicklung der Faserorientierung in der Materialzelle mikromechanisch simuliert. Dabei wird die erstellte Materialzelle mit einer vorgegebenen Rate gestreckt, wobei die Simulation grundsätzlich wie bereits mit Bezug zu der Bestimmung der ersten makroskopischen physikalischen Parametern beschrieben ausgeführt wird.

In einem Nachbearbeitungsschritt 143 wird aus den Positionen der Fasern der Orientierungstensor zweiter Ordnung berechnet. Der Orientierungstensor gibt dabei die Hauptorientierungsrichtung der Gesamtheit aller Fasern der Materialzelle an. Des Weiteren werden aus der zeitlichen Entwicklung der Komponenten des Orientierungstensors über beispielsweise ein Fit-Algorithmus bzw. ein Anpassungs-Algorithmus der optimale Fit für die zweiten makroskopischen physikalischen Parameter des zweiten makroskopischen Modells 112 berechnet.

Im Fall einer zweiten experimentellen Untersuchung 150 wird in einem Untersuchungsschritt 151 beispielsweise eine experimentelle Betrachtung des geschmierten Quetschflusses an einer Probe des faserverstärkten Kunststoffs durchgeführt. Die Orientierung der Fasern wird anschließend vermessen.

In einem Nachbearbeitungsschritt 152 wird aus den gemessenen Positionen der Fasern der Orientierungstensor zweiter Ordnung berechnet. Der Orientierungstensor gibt dabei die Hauptorientierungsrichtung der Gesamtheit aller Fasern der Materialzelle an. Des Weiteren werden aus der zeitlichen Entwicklung der Komponenten des Orientierungstensors über beispielsweise ein Fit-Algorithmus bzw. ein Anpassungs-Algorithmus der optimale Fit für die zweiten makroskopischen physikalischen Parameter des zweiten makroskopischen Modells 112 berechnet.

Bei der Verwendung des hybriden makroskopischen Modells 110 wird eine Gewichtung zwischen dem ersten makroskopischen Modell 111 und dem zweiten makroskopischen Modell 112 vorgenommen. Als Gewichtungsparameter wird dabei bevorzugt die Manas-Zloczower Zahl verwendet, welche die Art des vorliegenden Flusses beschreibt.

Figur 2 zeigt eine schematische Darstellung eines künstlichen neuronalen Netzes 200. Das künstliche neuronale Netz 200 wird verwendet, um bei der mikromechanischen Simulation 120, 140, vergleiche Figur 1, eine Roh-Interaktionskraft zwischen jeweils zwei Fasern der Materialzelle zu bestimmen.

Das künstliche neuronale Netz 200 weist in dem in Figur 2 dargestellten Beispiel eine Eingabeschicht 201 mit drei Eingabewerten auf. Ein erster Eingabewert ist ein normierter Interaktionswinkel a. Ein zweiter Eingabewert ist eine normierte Faserlänge bzw. bei Normierung auf den Faserdurchmesser ein Aspektverhältnis L/(2r) welcher aus der Faserlänge L und dem Faserdurchmesser 2r gebildet ist. Ein dritter Eingabewert ist eine normierte Distanz d/(2r) (mit der Distanz d zwischen den beiden Fasern und der maximalen betrachtete Distanz von 2r).

Das vorgeschlagene künstliche neuronale Netz 200 weist bevorzugt eine Ausgabeschicht 203 mit einem Ausgabewert auf. Der Ausgabewert ist in dem dargestellten Beispiel eine Roh-Interaktionskraft F, welche den Eingabewerten zugeordnet wird.

Zwischen der Ausgabeschicht 203 und der Eingabeschicht 201 sind in dem dargestellten Beispiel mehrere Zwischenschichten 202 angeordnet. Durch das Trainieren des künstlichen neuronalen Netzes 200 unter Verwendung von Trainingsdaten werden dabei insbesondere Gewichtungen von Neuronen der Zwischenschichten 202 und/oder deren Verknüpfung untereinander angepasst.

Die Erfindung ist nicht auf die hier beschriebenen Ausführungsbeispiele und die darin hervorgehobenen Aspekte beschränkt. Vielmehr ist sie durch die beigefügten Ansprüche definiert.

**Patentansprüche**

1. Verfahren (100) zur Simulation einer Faserorientierung in einem Spritzgussbauteil aus einem faserverstärkten Kunststoff, wobei mit einer makroskopischen Simulation des Spritzgießens eine nach dem Spritzgießen vorliegende Orientierung der Fasern in dem herzustellenden Spritzgussbauteil bestimmt wird und wobei die makroskopische Simulation des Spritzgießens unter Verwendung makroskopischer physikalischer Parameter des faserverstärkten Kunststoffs erfolgt, wobei bei der makroskopischen Simulation eine zeitliche Entwicklung des Faserorientierungstensors $\dot{A}$ über eine Kombination aus zwei makroskopischen Modellen bestimmt wird, wobei eine erste zeitliche Entwicklung des Faserorientierungstensors $\dot{A}_s$ über ein erstes makroskopisches Modell (111) auf Grundlage von Scherflüssen bestimmt wird und eine zweite zeitliche Entwicklung des Faserorientierungstensors $\dot{A}_e$ über ein zweites makroskopisches Modell (112) auf Grundlage von Elongationsflüssen bestimmt wird, **dadurch gekennzeichnet, dass** eine Gewichtung des Einflusses des ersten makroskopischen Modells (111) und des zweiten makroskopischen Modells (112) auf die bei der Simulation bestimmte zeitliche Entwicklung des Faserorientierungstensors $\dot{A}$ auf Basis der Manas-Zloczower Zahl $M_z$ vorgenommen wird, wobei ein unterer Wert der Manas-Zloczower Zahl bevorzugt auf einen Wert von 0,5 begrenzt wird, was dem Fall eines reinen Scherflusses entspricht, und ein oberer Wert von 1 einem reinen Elongationsfluss entspricht.

2. Verfahren (100) nach Anspruch 1, **dadurch gekennzeichnet, dass** erste makroskopische physikalische Parameter für das erste makroskopische Modell (111) und/oder zweite makroskopische physikalische Parameter für das zweite makroskopische Modell (112) über experimentell ermittelte Daten bestimmt werden.

3. Verfahren (100) nach einem der Ansprüche 1 oder 2, **dadurch gekennzeichnet, dass** erste makroskopische physikalische Parameter für das erste makroskopische Modell (111) und/oder zweite makroskopische physikalische Parameter für das zweite makroskopische Modell (112) über eine mikromechanische Simulation (120, 140) ermittelt werden.

4. Verfahren (100) nach Anspruch 3, **dadurch gekennzeichnet, dass** die mikromechanische Simulation (120, 140) unter Verwendung der Diskreten Elemente Methode (DEM), der Smoothed Particle Methodik oder der moving particle semi-implicit (MPS) Methode durchgeführt wird.

5. Verfahren (100) nach Anspruch 3 oder 4, **dadurch gekennzeichnet, dass** das Ermitteln der ersten und/oder zweiten makroskopischen physikalischen Parameter unter Verwendung einer mikromechanischen Simulation (120, 140) folgende Schritte umfasst:

   a) Bilden einer Materialzelle mit einem Ensemble aus einzelnen Fasern, welche in einem Matrixmaterial eingebettet sind, wobei der Faservolumengehalt und die Faserlänge als Eingabewerte vorgegeben werden,
   b) Durchführen einer mikromechanischen Simulation (120, 140), bei der die Materialzelle mit einer vorgegebenen Scherrate für einen vorgegebenen Zeitraum geschert wird oder mit einer vorgegebenen Elongationsrate gestreckt wird, wobei bei jedem Zeitschritt der Simulation zumindest die Positionen der Fasern des Ensembles bestimmt werden, wobei bei der mikromechanischen Simulation (120, 140) Interaktionskräfte zwischen jeweils zwei Fasern bestimmt werden, wobei für zumindest einen Teil der Faser-Faser Interaktionen eine Roh-Interaktionskraft über ein trainiertes Maschinenlernmodell mit den Eingabeparametern Interaktionswinkel, Faseraspektverhältnis und der Distanz zwischen den Fasern bestimmt wird und die Interaktionskraft unter Verwendung einer linearen Beziehung zwischen der Viskosität des Matrixmaterials und der Relativgeschwindigkeit zwischen den Fasern aus der Roh-Interaktionskraft bestimmt wird

6. Verfahren (100) nach Anspruch 5, **dadurch gekennzeichnet, dass** die Interaktionskräfte die Lubrikationskräfte zwischen jeweils zwei Fasern berücksichtigen.

7. Verfahren nach Anspruch 6, **dadurch gekennzeichnet, dass** zum Trainieren des Maschinenlernmodells analytische Lösungen für die Lubrikationskräfte und/oder numerische Lösungen für die Lubrikationskräfte als Trainingsdaten verwendet werden, wobei die Trainingsdaten jeweils eine Interaktionskraft den drei Eingabeparametern Interaktionswinkel, Aspektverhältnis und der Distanz zwischen den Fasern zuordnen.

8. Verfahren (100) nach einem der Ansprüche 5 bis 7, **dadurch gekennzeichnet, dass** das Maschinenlernmodell als ein künstliches neuronales Netz (200) ausgestaltet ist

9. Auslegungsverfahren zum Auslegen eines Spritzgussbauteils aus einem faserverstärkten Kunststoff, wobei eine Simulation der Faserorientierung mit dem Verfahren (100) gemäß einem der Ansprüche 1 bis 8 durchgeführt wird, eine Belastbarkeit des Spritzgussbauteils bestimmt wird und die bestimmte Belastbarkeit mit einer vorgegebenen Belastbarkeit verglichen wird.

**Claims**

1. Method (100) for simulating a fibre orientation in an injection moulding component made of a fibre-reinforced plastic, wherein a macroscopic simulation of injection moulding is used to determine a fibre orientation present after injection moulding in the injection moulding component to be produced, and wherein the macroscopic simulation of injection moulding is performed using macroscopic physical parameters of the fibre-reinforced plastic, wherein a development of the fibre orientation tensor $\dot{A}$ over time is determined in the macroscopic simulation by a combination of two macroscopic models, wherein a first development of the fibre orientation tensor $\dot{A}_s$ over time is determined using a first macroscopic model (111) based on shear flows and a second development of the fibre orientation tensor $\dot{A}_s$ over time is determined using a second macroscopic model (112) based on elongation flows, **characterized in that** a weighting of the influence of the first macroscopic model (111) and of the second macroscopic model (112) on the development of the fibre orientation tensor $\dot{A}$ over time, as determined in the simulation, is implemented on the basis of the Manas-Zloczower number $M_z$, wherein a lower value of the Manas-Zloczower number is preferably limited to a value of 0.5, which corresponds to the case of a pure shear flow, and an upper value of 1 corresponds to a pure elongation flow.

2. Method (100) according to Claim 1, **characterized in that** first macroscopic physical parameters for the first macroscopic model (111) and/or second macroscopic physical parameters for the second macroscopic model (112) are determined via experimentally ascertained data.

3. Method (100) according to either of Claims 1 and 2, **characterized in that** first macroscopic physical parameters for the first macroscopic model (111) and/or second macroscopic physical parameters for the second macroscopic model (112) are ascertained by way of a micromechanical simulation (120, 140).

4. Method (100) according to Claim 3, **characterized in that** the micromechanical simulation (120, 140) is carried out using the discrete elements method (DEM), the smoothed particle method or the moving particle semi-implicit (MPS) method.

5. Method (100) according to Claim 3 or 4, **characterized in that** the ascertainment of the first and/or second macroscopic physical parameters using a micromechanical simulation (120, 140) comprises the following steps:

a) forming a material cell having an ensemble of individual fibres embedded in a matrix material, wherein the fibre volume content and the fibre length are specified as input values,
b) performing a micromechanical simulation (120, 140), in which the material cell is sheared at a predetermined shear rate for a predetermined period of time or is stretched at a predetermined elongation rate, wherein at least the positions of the fibres of the ensemble are determined at each time step of the simulation, wherein interaction forces between two respective fibres are determined within the micromechanical simulation (120, 140), wherein a raw interaction force is determined for at least some of the fibre-fibre interactions by way of a trained machine learning model with input parameters of interaction angle, fibre aspect ratio and distance between the fibres, and the interaction force is determined from the raw interaction force using a linear relationship between the viscosity of the matrix material and the relative velocity between the fibres.

6. Method (100) according to Claim 5, **characterized in that** the interaction forces take into account the lubrication forces between two respective fibres.

7. Method according to Claim 6, **characterized in that** analytical solutions for the lubrication forces and/or numerical solutions for the lubrication forces are used as training data for training the machine learning model, wherein the training data each assign an interaction force to the three input parameters of interaction angle, aspect ratio and distance between the fibres.

8. Method (100) according to any of Claims 5 to 7, **characterized in that** the machine learning model is designed as an artificial neural network (200).

9. Design method for designing an injection moulding component made of a fibre-reinforced plastic, wherein a simulation of the fibre orientation is carried out using the method (100) according to any of Claims 1 to 8, a load capacity of the injection moulding component is determined and the determined load capacity is compared with a predetermined load capacity.

**Revendications**

1. Procédé (100) de simulation d'une orientation de fibres dans un composant moulé par injection constitué d'une matière plastique renforcée de fibres, une orientation des fibres, qui résulte suite au moulage par injection, dans le composant moulé par injection à produire, étant déterminée à l'aide d'une simulation macroscopique du moulage par injection, et la simulation macroscopique du moulage par injection étant effectuée par utilisation de paramètres physiques macroscopiques de la matière plastique renforcée de fibres, une évolution temporelle du tenseur d'orientation des fibres $\dot{A}$ étant déterminée lors de la simulation macroscopique à l'aide d'une combinaison de deux modèles macroscopiques, une première évolution temporelle du tenseur d'orientation des fibres $\dot{A}_s$ étant déterminée à l'aide d'un premier modèle macroscopique (111) sur la base de flux de cisaillement et une seconde évolution temporelle du tenseur d'orientation des fibres $\dot{A}_s$ étant déterminée à l'aide d'un second modèle macroscopique (112) sur la base de flux d'allongement, **caractérisé en ce qu'**une pondération de l'influence du premier modèle macroscopique (111) et du second modèle macroscopique (112) sur l'évolution temporelle du tenseur d'orientation des fibres $\dot{A}$ déterminée lors de la simulation est effectuée sur la base du nombre de Manas-Zloczower $M_z$, une valeur inférieure du nombre de Manas-Zloczower étant de préférence limitée à une valeur de 0,5, cela correspondant au cas d'un flux de cisaillement pur, et une valeur supérieure de 1 correspondant à un flux d'allongement pur.

2. Procédé (100) selon la revendication 1, **caractérisé en ce que** les premiers paramètres physiques macroscopiques pour le premier modèle macroscopique (111) et/ou les seconds paramètres physiques macroscopiques pour le second modèle macroscopique (112) sont déterminés à l'aide de données obtenues expérimentalement.

3. Procédé (100) selon l'une des revendications 1 ou 2, **caractérisé en ce que** les premiers paramètres physiques macroscopiques pour le premier modèle macroscopique (111) et/ou les seconds paramètres physiques macroscopiques pour le second modèle macroscopique (112) sont déterminés à l'aide d'une simulation micromécanique (120, 140).

4. Procédé (100) selon la revendication 3, **caractérisé en ce que** la simulation micromécanique (120, 140) est effectuée par utilisation de la Méthode des Éléments Discrets (DEM), la Méthodologie des Particules Lissées ou la méthode semi-implicite des particules en mouvement (MPS).

5. Procédé (100) selon la revendication 3 ou 4, **caractérisé en ce que** la détermination des premiers et/ou seconds paramètres physiques macroscopiques par utilisation d'une simulation micromécanique (120, 140) comprend les étapes suivantes :

   a) la formation d'une cellule de matériau à partir d'un ensemble de fibres individuelles, lesquelles sont incorporées dans un matériau de matrice, le contenu volumique de fibres et la longueur des fibres étant définis en tant que valeurs d'entrée,
   b) la réalisation d'une simulation micromécanique (120, 140) lors de laquelle la cellule de matériau est cisaillée avec un taux de cisaillement prédéfini pendant une période prédéfinie ou est étirée avec un taux d'allongement prédéfini, chaque étape temporelle de la simulation permettant de déterminer au moins les positions des fibres de l'ensemble, la simulation micromécanique (120, 140) permettant de déterminer des forces d'interaction entre deux fibres respectives, une force d'interaction brute étant déterminée pour au moins une partie des interactions de fibre à fibre à l'aide d'un modèle d'apprentissage automatique entraîné avec comme paramètres d'entrée l'angle d'interaction, le rapport d'aspect des fibres et la distance entre les fibres, et la force d'interaction est déterminée à partir de la force d'interaction brute par utilisation d'une relation linéaire entre la viscosité du matériau de la matrice et la vitesse relative entre les fibres.

6. Procédé (100) selon la revendication 5, **caractérisé en ce que** les forces d'interaction tiennent compte des forces de lubrification entre deux fibres respectives.

7. Procédé selon la revendication 6, **caractérisé en ce que** des solutions analytiques pour les forces de lubrification et/ou des solutions numériques pour les forces de lubrification sont utilisées en tant que données d'entraînement pour l'entraînement du modèle d'apprentissage automatique, les données d'entraînement associant respectivement une force d'interaction aux trois paramètres d'entrée que sont l'angle d'interaction, le rapport d'aspect et la distance entre les fibres.

8. Procédé (100) selon l'une des revendications 5 à 7, **caractérisé en ce que** le modèle d'apprentissage automatique est conçu sous forme d'un réseau neuronal artificiel (200).

9. Procédé de conception pour permettre la conception d'un composant moulé par injection constitué d'une matière plastique renforcée de fibres, une simulation de l'orientation des fibres étant effectuée au moyen du procédé (100) selon l'une des revendications 1 à 8, une capacité de charge du composant moulé par injection étant déterminée et la capacité de charge déterminée étant comparée à une capacité de charge prédéfinie.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012330627 A1

- EP 1253491 A1

**In der Beschreibung aufgeführte Nicht-Patentliteratur**

- **H.-C. TSENG ; R.-Y. CHANG ; C.-H. HSU.** The use of principal spatial tensor to predict anisotropic fiber orientation in concentrated fiber suspensions. *Journal of Rheology,* 2017, vol. 62 (1), 312-320
- **S. K. KUGLER et al.** Efficient parameter identification for macroscopic fiber orientation models with experimental data and a mechanistic fiber simulation. *AIP Conference Proceedings,* 2020, vol. 2205, 020050, https://doi.org/10.1063/1.5142965
- **CHENG, J. J. ; MANAS-ZLOCZOWER, I.** Flow Field Characterization in a Banbury Mixer. *International Polymer Processing,* 1990, vol. 5 (3), 178-183
- **K. TESCH.** On invariants of fluid mechanics tensors. *Task Quarterly,* 2013, vol. 17 (3-4), 1000-1008
- **S. KUGLER et al.** Macroscopic fiber orientation model evaluation for concentrated short fiber reinforced polymers in comparison to experimental data. *Polymer Composites,* 2020

- **G. LAMBERT et al.** Evaluating Rigid and Semiflexible Fiber Orientation Evolution Models in Simple Flows. *Journal of Manufacturing Science and Engineering, Transactions of the ASME,* Marz 2017, vol. 139 (3
- **M. SCHNEIDER.** The sequential addition and migration method to generate representative volume elements for the homogenization of short fiber reinforced plastics. *Computational Mechanics,* 2017, vol. 59 (2), 247-263
- **S. LINSTRÖM ; T. UESAKA.** Simulation of the motion of flexible fibers in viscous fluid flow. *Physics of Fluids,* 2007, vol. 19 (11), 113307
- **J. KROMKAMP et al.** Shear-induced self-diffusion and microstructure in non-Brownian suspensions at non-zero Reynolds numbers. *Journal of Fluid Mechanics,* 2005, vol. 529, 253-278
- **Y. YAMANE et al.** Numerical simulation of semi-dilute suspensions of rodlike particles in shear flow. *Journal of Non-Newtonian Fluid Mechanics,* 1994, vol. 54, 405-421